# EUROPÄISCHE PATENTANMELDUNG

(11) **EP 4 428 063 A1**
(43) Veröffentlichungstag der Anmeldung: **11.09.2024**
(21) Anmeldenummer: 24162132.5
(22) Anmeldetag: 07.03.2024
(51) Int. Cl.: B65G 1/04, B65G 1/06

(54) **LAGER- UND ENTNAHMESYSTEM SOWIE VERFAHREN ZUM BETREIBEN EINES LAGER- UND ENTNAHMESYSTEMS**

(30) Priorität: 10.03.2023 DE 102023202205
(71) Anmelder: Gebhardt Fördertechnik GmbH, D-74889 Sinsheim (DE)
(72) Erfinder: Gebhardt, Marco, 74889 Sinsheim (DE)
(74) Vertreter: Ullrich & Naumann PartG mbB

(57) **Zusammenfassung**

Lager- und Entnahmesystem für Behälter umfasst ein Regallager (12) mit einer Mehrzahl von sich in einer Längsrichtung (x) erstreckenden Lagerregalen (14), die in einer oder mehreren übereinanderliegenden Regalebenen (16) Lagerplätze (18) für Behälter (20) aufweisen, wobei einige der Lagerregale (14) in einer Querrichtung (z) beabstandet zueinander angeordnet sind, derart, dass sich zwischen den jeweiligen Lagerregalen (14) eine Regalgasse (22) ergibt, sowie mindestens ein automatisiertes in der Regalgasse (22) verfahrbares und zum Transport von Behältern (20) eingerichtetes Regalförderzeug (24) mit Zugriff auf die Lagerplätze (18). Im Hinblick auf einen besonders effektiven Betrieb umfasst das Lager- und Entnahmesystem weiterhin eine oberhalb des Regallagers (12) angeordnete horizontale Gitterstruktur (26), wobei die Gitterstruktur (26) Längstransportwege (28a) in der Längsrichtung (x) der Lagerregale (12) und Quertransportwege (28b) in der Querrichtung (z) der Lagerregale (12) definiert, eine Anzahl von in dem Regallager (12) ausgebildeten, von oben frei zugänglich ausgebildeten Übergabeplätzen (30) für Behälter (20) mit Zugriff durch das mindestens eine Regalförderzeug (24), sowie mindestens ein zum Fahren auf der Gitterstruktur (26) entlang der Längstransportwege (28a) und/oder der Quertransportwege (28b) ausgebildetes Transportfahrzeug (32) für Behälter (20) mit Zugriff von oben auf die Übergabeplätze (30) des Regallagers (12) durch die Gitterstruktur (26) hindurch.

## Beschreibung

Die Erfindung betrifft ein Lager- und Entnahmesystem umfassend ein Regallager mit einer Mehrzahl von sich in einer Längsrichtung erstreckenden Lagerregalen, die in einer oder mehreren übereinanderliegenden Regalebenen Lagerplätze für Behälter aufweisen, wobei einige der Lagerregale in einer Querrichtung beabstandet zueinander angeordnet sind, derart, dass sich zwischen den jeweiligen Lagerregalen eine Regalgasse ergibt, sowie mindestens ein automatisiertes in der Regalgasse verfahrbares und zum Transport von Behältern eingerichtetes Regalförderzeug mit Zugriff auf die Lagerplätze.

Des Weiteren betrifft die vorliegende Erfindung ein Verfahren zum Betreiben eines derartigen Lager- und Entnahmesystems.

Bei Lager- und Entnahmesysteme der hier in Rede stehenden Art befindet sich das Lagergut üblicherweise in Lagerbehältern, welche in Regalen gelagert werden, die in Regalreihen angeordnet sind. Jeder Lagerbehälter enthält dabei ein oder mehrere Produkte eines bestimmten Produkttyps. Die Bedienung eines solchen Warenlagers erfolgt über Freiräume zwischen den Regalreihen, den sogenannten Lagergassen, in denen mittels eines Transportsystems, bspw. einem Regalbediengerät oder einem Shuttle-System, die einzelnen Regalfächer angefahren werden können. Da die Lagergassen für die eigentliche Lagerung nicht zur Verfügung stehen, ist die Lagerdichte derartiger Warenlager relativ niedrig. Mit anderen Worten ist die Größe des tatsächlich für die Lagerung von Produkten zur Verfügung stehenden Raums relativ klein im Vergleich zu der Größe des Raums, der für das Warenlager als Ganzes erforderlich ist.

Zur Verbesserung derartiger herkömmliche Warenlager insbesondere im Hinblick auf die realisierbare Lagerdichte sind spezielle automatische Blocklagersysteme entwickelt worden. Bei diesen Blocklagern werden die Lagerbehälter nicht mehr in konventionellen Regalen gelagert, sondern die Lagerbehälter werden in einem selbsttragenden modularen Raster, welches vertikale Schächte definierter Größe bildet, übereinandergestapelt. Die Stapel sind dabei in einer Längsrichtung und in einer Querrichtung in Reihen angeordnet. Auf die einzelnen Lagerbehälter wird von oben mittels geeigneter Transportfahrzeuge zugegriffen, die sich auf entsprechenden Fahrschienen bewegen, die in Form einer 2D Matrix auf der Regalstruktur angeordnet sind. Dementsprechend müssen zwischen den Reihen keine Lagergassen ausgebildet sein, weshalb diese Lagerstruktur eine deutliche Verbesserung der Lagerungsdichte bietet.

Als nachteilig erweist sich jedoch, dass diese Art Blocklager nur für die oberste Ebene an Behältern einen direkten Zugriff bieten. Da Behälter für deren Zugriff oft ausgegraben werden müssen, steigt die mittlere Zugriffszeit auf die Behälter. Deshalb werden automatische Blocklager oftmals mit gassengebundenen Lagern wie beispielsweise einem Zeilenregal kombiniert, da derartige Zeilenregale einen Direktzugriff auf gelagerte, einzelne Behälter erlauben und daher einzelne Behälter mithilfe solcher Zeilenregale deutlich schneller an eine Zielposition gebracht werden können als im Fall eines reinen Blocklagers. Eine alternativ mögliche Pufferung oder Vorsortierung von Behältern im Blocklager erfordert hingegen ein Stapeln der Behälter im Blocklager, wodurch sich die Zugriffszeit nur sehr wenig verbessern lässt. Eine Verbindung von Blocklager und Zeilenlager oder Zeilenregal erfolgt im Stand der Technik meist mit einem zusätzlichen Fördertechnik-Loop und gegebenenfalls mit Senkrechtförderern im Blocklager, um die Behälter auf unterschiedliche Lagerebenen zu bringen. Diese zusätzliche Technik ist aufwendig und teuer und erfordert eine separate Steuerung und weitere Materialflussrechnerkompetenzen oder - ressourcen.

Ein derartiges Lager- und Entnahmesystem ist beispielsweise aus der WO 2016/198467 A1 bekannt. Das Lager- und Entnahmesystem 1 ist dort als Blocklager für Behälter 10 ausgebildet und weist eine Gitterstruktur 14 und Transportfahrzeuge 30 zum Fahren auf der Gitterstruktur 14 auf. Des Weiteren sind Fahrzeuge 270 gezeigt, die sich entlang einer Schiene 260 bewegen können und die aus einem Regal, das von oben durch eine Gitterstruktur bedient wird, Behälter 10 entnehmen können.

Bei dem bekannten Lager- und Entnahmesystem ist ein Zugriff auf Behältern 10 aus dem Blocklager heraus aufgrund der durch eine Gitterstruktur erfolgende Bedienung des Regals und der Weitergabe der Behälter 10 über entlang Schienen 260 fahrende Fahrzeuge 270 sowohl konstruktiv aufwendig als auch zeitaufwendig.

Der vorliegenden Erfindung liegt daher die Aufgabe zugrunde, ein Lager- und Entnahmesystem für Behälter sowie ein Verfahren zum Betreiben eines Lager- und Entnahmesystems für Behälter anzugeben, wonach ein besonders effektiver Betrieb des Lager- und Entnahmesystems mit konstruktiv einfachen Mitteln ermöglicht ist.

Erfindungsgemäß wird die voranstehende Aufgabe durch ein Lager- und Entnahmesystem mit den Merkmalen des Anspruchs 1 und durch ein Verfahren zum Betreiben eines Lager- und Entnahmesystems mit den Merkmalen des nebengeordneten Anspruchs 13 gelöst.

Danach ist das Lager- und Entnahmesystem gemäß Anspruch 1 gekennzeichnet durch eine oberhalb des Regallagers angeordnete horizontale Gitterstruktur, wobei die Gitterstruktur Längstransportwege in der Längsrichtung der Lagerregale und Quertransportwege in der Querrichtung der Lagerregale definiert, eine Anzahl von in dem Regallager ausgebildeten, von oben frei zugänglich ausgebildeten Übergabeplätzen für Behälter mit Zugriff durch das mindestens eine Regalförderzeug, sowie mindestens ein zum Fahren auf der Gitterstruktur entlang der Längstransportwege und/oder der Quertransportwege ausgebildetes Transportfahrzeug für Behälter mit Zugriff von oben auf die Übergabeplätze des Regallagers durch die Gitterstruktur hindurch.

Das Verfahren gemäß Anspruch 13 umfasst die Schritte Transportieren eines Behälters zu einem Übergabeplatz und Abstellen des Behälters auf dem Übergabeplatz durch das Regalförderzeug und Übernahme des Behälters von dem Übergabeplatz durch die Gitterstruktur hindurch und Weitertransport durch das mindestens eine Transportfahrzeug; und/oder Transportieren eines Behälters zu einem Übergabeplatz und Abstellen des Behälters auf dem Übergabeplatz durch die Gitterstruktur hindurch durch das mindestens eine Transportfahrzeug und Übernahme des Behälters von dem Übergabeplatz und Weitertransport durch das Regalförderzeug.

In erfindungsgemäßer Weise ist zunächst erkannt worden, dass die voranstehende Aufgabe durch eine geschickte Anordnung der Lagerregale und einer Gitterstruktur mit darauf operierenden Transportfahrzeugen bzw. Transportrobotern relativ zueinander auf überraschend einfache Weise gelöst wird. Im Konkreten ist erfindungsgemäß vorgesehen, dass oberhalb des Regallagers eine Gitterstruktur angeordnet ist, auf der sich Transportfahrzeuge entlang von durch die Gitterstruktur definierten Längs- und Quertransportwegen oberhalb des Regallagers bewegen können. Als Bindeglied bzw. Schnittstelle zwischen dem Regallager und der Gitterstruktur (bzw. damit gekoppelter Komponenten, wie bspw. (Kommissionier-)Arbeitsplätze oder weitere Lagereinheiten, z.B. Blocklager) dient eine Anzahl von in dem Regallager ausgebildeten Übergabeplätzen für Behälter. Diese Übergabeplätze sind derart in dem Regallager angeordnet, dass sich jeder Übergabeplatz im Zugriffsbereich von mindestens einem der in den Regalgassen des Regallagers operierenden Regalförderzeuge befindet. Zudem sind die Übergabeplätze derart ausgebildet, dass sie von oben frei zugänglich sind, und die Transportfahrzeuge sind eingerichtet, dass sie von oben auf die Übergabeplätze durch die Gitterstruktur hindurch zugreifen können. Dementsprechend ist in erfindungsgemäßer Weise ein Betrieb des Lager- und Entnahmesystems realisierbar, wonach ein von einem Regalförderzeug auf einem Übergabeplatz abgestellter Behälter von einem Transportfahrzeug durch die Gitterstruktur hindurch übernommen wird und auf der Gitterstruktur zielgesteuert weitertransportiert wird. Umgekehrt ist es möglich, dass ein von einem Transportfahrzeug auf einen Übergabeplatz abgesenkter und dort abgestellter Behälter von einem Regalförderzeug übernommen und zu einem definierten Lagerplatz innerhalb des Regallagers weitertransportiert wird.

Das erfindungsgemäße Lager- und Entnahmesystem kann ohne zusätzliche Komponenten wie Fördertechnik und Senkrechtförderer als reines "Roboterlager" (d.h. auf Basis der Regalförderzeuge innerhalb der Regalgassen sowie der Transportfahrzeuge auf der Gitterstruktur) realisiert werden. Im Vergleich zu einem Blocklager der eingangs beschriebenen Art bietet das erfindungsgemäße Lager- und Entnahmesystem u.a. den Vorteil eines Direktzugriffs auf die Behälter (d.h. ein frei "Buddeln" von Behältern durch die Transportfahrzeuge entfällt). Hinzu kommt, dass durch den erfindungsgemäßen Einsatz der Übergabeplätze und der Gitterstruktur eine Entkopplung von Lagerbereich einerseits und Arbeitsplätzen andererseits stattfinden kann, wodurch zum einen zusätzliche Abläufe im Regallager ermöglicht werden (wie bspw. ein Verdichten bei zweifachtiefer Lagerung). Zum anderen kann das Lager mit einer - im Vergleich zu einem reinen Blocklager - reduzierte Anzahl von Transportfahrzeugen bzw. -robotern betrieben werden, wodurch wiederum die Wartungsintensität reduziert ist. Weiterhin reduziert sich die Zugriffszeit, d.h. die Zeit von einer Behälteranforderung bis zur Behälterandienung am Arbeitsplatz, deutlich. Zudem kann das erfindungsgemäße Lager- und Entnahmesystem bis knapp unter das Hallendach gebaut werden, was bei einem herkömmlichen Blocklager aufgrund des zur Störungsbeseitigung auf dem Blocklager zwingend notwendigen Zugangs nicht möglich ist - dies ist positiv für die Lagerdichte. Schließlich ermöglicht das erfindungsgemäße Lager- und Entnahmesystem eine einfache Sequenzierung der Behälter, weil diese in der notwendigen Reihenfolge von den Übergabeplätzen abgeholt werden können.

Folglich sind mit dem erfindungsgemäßen Lager- und Entnahmesystem und dem erfindungsgemäßen Verfahren zum Betreiben eines Lager- und Entnahmesystems ein Lager- und Entnahmesystem und ein Verfahren bereitgestellt, wonach ein besonders effektiver Betrieb des Lager- und Entnahmesystems mit konstruktiv einfachen Mitteln ermöglicht ist.

In diesem Dokument ist mit dem Begriff "Behälter" (manchmal auch als Ladehilfsmittel, LHM, bezeichnet) jegliches Behältnis oder jegliche Aufnahmeeinrichtung umfasst, das oder die zum Lagern und/oder Transportieren von geeignetem Fördergut oder Lagergut geeignet ist. Es sind insbesondere keine proprietären Behälter notwendig, vielmehr muss lediglich gewährleistet sein, dass die Behälter von oben durch die Transportfahrzeuge gegriffen werden können (bspw. mittels an der Oberseite der Behälter ausgebildeter Greifschächte). Im Hinblick auf einen effizienten Lagerbetrieb bieten sich Behälter mit Länge und Höhe in einem vorgegebenen Raster an (bspw. 600x400 mm). Was die Höhe der Behälter anbelangt, so können grundsätzlich auch unterschiedliche Behälterhöhen in dem Regallager gelagert werden.

Im Hinblick auf eine möglichst einfache Konstruktion kann vorgesehen sein, dass die Übergabeplätze als passive Übergabeplätze ausgebildet sind, d.h. dass die Übergabeplätze keinen eigenen Antrieb umfassen. Insofern können die Übergabeplätze z.B. durch Auflageböden (Blech, Holz, Gitter, etc.) oder durch Auflagewinkel (bspw. als gekantetes durchgehendes Blech am Behälterrand oder als nur punktuelles Auflager) ausgeführt sein.

In einer Ausführungsform umfasst das Lager- und Entnahmesystem eine Mehrzahl von Transportfahrzeugen. Generell kann das Lager- und Entnahmesystem derart ausgestaltet sein, dass jedes einzelne der Transportfahrzeuge mittels der Übergabeplätze und im Zusammenspiel mit den Regalförderzeugen Zugriff auf alle Behälter des Regallagers hat.

Im Rahmen eines konkreten Ausführungsbeispiels kann vorgesehen sein, dass die Transportfahrzeuge eine Lift- und Greifeinrichtung umfassen, welche in für sich gesehen bekannter Weise eingerichtet ist, ein Greifen eines Behälters von oben sowie ein anschließendes Anheben und/oder Absenken des Behälters zu ermöglichen. Im Hinblick auf einen sicheren und störungsfreien Betrieb kann weiterhin vorgesehen sein, dass oberhalb der Übergabeplätzen Schächte zur Führung der Lift- und Greifeinrichtung angeordnet sind. Diese Schächte müssen dabei nicht vollumfänglich ausgekleidet sein. Vielmehr können die Schächte bspw. durch geeignet ausgebildete, an den vier Eckpunkten eines Übergabeplatzes (oder an zwei diagonal gegenüberliegenden Eckpunkten) vertikal verlaufende Profile (bspw. Stahlwinkel) definiert sein.

Bei einem weiteren konkreten Ausführungsbeispiel kann die Gitterstruktur eine Anzahl von Gitterzellen aufweisen, die jeweils einem Arbeitsplatz (bspw. einem Kommissionier-Arbeitsplatz) mittelbar oder unmittelbar zugeordnet sind. Dabei kann vorgesehen sein, dass ein Transportfahrzeug eingerichtet ist, einen als Ziel-Behälter definierten Behälter von einem jeweiligen der Übergabeplätze aufzunehmen, den Ziel-Behälter auf ein Niveau oberhalb der Gitterstruktur anzuheben und zu derjenigen Gitterzelle der Gitterstruktur zu transportieren, die einem als Ziel-Arbeitsplatz definierten Arbeitsplatz zugeordnet ist.

Alternativ oder zusätzlich kann vorgesehen sein, dass mindestens eine Fördertechnik in das Regallager integriert ist, welche an einen oder mehrere Arbeitsplätze angekoppelt ist. Im Hinblick auf eine effektive Anordnung der Arbeitsplätze entlang der Längsseite des Regallagers ist die Fördertechnik in vorteilhafter Weise derart ausgelegt, dass sie in Querrichtung zu den Lagerregalen verläuft. Dabei kann vorgesehen sein, dass ein Transportfahrzeug eingerichtet ist, einen als Ziel-Behälter definierten Behälter von einem jeweiligen der Übergabeplätze aufzunehmen, den Ziel-Behälter auf ein Niveau oberhalb der Gitterstruktur anzuheben und an die jeweilige Fördertechnik abzugeben, welche an einen als Ziel-Arbeitsplatz definierten Arbeitsplatz ankoppelt.

Im Hinblick auf eine effiziente und leicht handhabbare Anordnung der Übergabeplätze innerhalb des Regallagers kann vorgesehen sein, dass die Übergabeplätze in einer sich in der Längsrichtung der Lagerregale erstreckenden Reihe zwischen zwei benachbarten Regalgassen vorgesehen sind. Zur effektiven Ausnutzung einer gegebenen Struktur könnte sich diese Reihe vorzugsweise über die gesamte Länge des Regallagers erstrecken. Je nach Anzahl der Übergabeplätze und Länge der Reihe kann diese neben der Übergabe auch zur Lagerung von Behältern eingesetzt werden, z.B. könnten unter den Übergabeplätzen Lagerplätze mit Zugriff durch Lagerfahrzeuge vorhanden sein. Ferner kann die Reihe verwendet werden, um darin Einrichtungen zum Brandschutz (wie Sprinkler, Brandschutzwände, Wärmestaubleche, Rauchmelder, Rauchabzug, etc.) oder zur Belüftung/Klimatisierung sowie zur Beleuchtung platzsparend zu integrieren, ohne die eigentliche Funktion der Übergabe zu beeinträchtigen.

Im Konkreten und im Hinblick auf einen besonders effektiven Betrieb des Lager- und Entnahmesystems kann vorgesehen sein, dass sich die Übergabeplätze einer zwischen jeweils zwei benachbarten Regalgassen angeordneten Reihe von Übergabeplätzen im gemeinsamen Zugriff durch die in den jeweiligen zueinander benachbarten Regalgassen operierenden Regalförderzeuge befinden. Mithin ist es für ein Regalförderzeug möglich, sowohl durch Abgabe eines Behälters nach links als auch nach rechts einen Übergabeplatz zu erreichen. Gleiches gilt für die Aufnahme eines Behälters von einem Übergabeplatz.

In einer alternativen Ausführungsform kann vorgesehen sein, dass die Lagerregale und die Regalgasse derart angeordnet sind, dass die Regalförderzeuge jeweils nur von einer Regalgasse aus auf den gleichen Behälter zugreifen können. Übergabeplätze können dabei auf den jeweils hintersten Plätzen einer mehrfachtiefen Lagerung ausgebildet sein. Entsprechend sind die Übergabeplätze somit nicht wie bei der zuvor beschriebenen Ausführungsform zwischen zwei benachbarten Regalgasse ausgebildet, sondern als Teil des Regallagers auf den jeweils gassenfernsten Lagerplätzen. Eine Ausgestaltung des Regallagers mit mehreren unterschiedlichen Bereichen, in denen die beiden beschriebenen Ausführungsformen miteinander kombiniert sind, ist ebenfalls denkbar.

Zur Gewährleistung eines besonders flexiblen und effektiven Betriebs des Lager- und Entnahmesystems kann vorgesehen sein, dass die Übergabeplätze einer Reihe von Übergabeplätzen in unterschiedlichen Regalebenen der Lagerregale angeordnet sind. Auf diese Weise ist eine angepasste Ankopplung an Arbeitsplätze mit unterschiedlich hohen Leistungen bzw. Leistungsanforderungen ermöglicht. Im Rahmen eines konkreten Ausführungsbeispiels kann insoweit beispielsweise vorgesehen sein, dass die Anordnung der Übergabeplätze entlang einer Lagerregalreihe einen treppenförmigen Verlauf in Bezug auf die Regalebenen aufweist.

Im Hinblick auf eine besonders einfache und leicht handhabbare Kopplung zwischen Regallager einerseits und der Gitterstruktur (bzw. etwaige daran ankoppelnde Arbeitsplätze) andererseits kann vorgesehen sein, dass die Gitterstruktur derart auf die Dimensionierung des Regallagers abgestimmt ist, dass jede Gitterzelle der Gitterstruktur mit einem Lagerplatz bzw. Übergabeplatz korrespondiert. Es sei angemerkt, dass eine derartige Ausgestaltung in Abhängigkeit von der Größe der gelagerten Behälter sowie der konkreten Struktur des Regallagers u.U. dazu führen kann, dass den auf der Gitterstruktur operierenden Transportfahrzeugen, welche üblicherweise über eine vorgegebene unveränderliche Spurbreite in Längs- und Querrichtung verfügen, nicht alle existierenden Längs- und Quertransportwege tatsächlich zur Verfügung stehen.

Im Hinblick auf einen effektiven und flexiblen Betrieb des Lager- und Entnahmesystems kann im Rahmen eines konkreten Ausführungsbeispiels zudem vorgesehen sein, dass die Gitterstruktur zumindest einseitig über das Regallager hinausragt. Über einen derartigen überstehenden Bereich der Gitterstruktur lassen sich bspw. entfernte Arbeitsplätze und/oder ein weiteres Lager, bspw. ein Blocklager, anbinden.

In Abhängigkeit von den konkreten Anforderungen bzw. Gegebenheiten (bspw. geplant Investitionskosten, geforderte Umschlagleistungen, etc.) können die in den Regalgassen operierenden Regalförderzeuge bspw. als Regalbediengerät, als Einebenen-Shuttle, OLS, oder als Mehrebenen-Shuttle, MLS, ausgebildet sein. Unter einem Regalbediengerät (nachfolgend kurz RBG), wie es bspw. in der DE 10 2012 000 197 A1 beschrieben ist, wird allgemein eine auf einer Fahrschiene entlang der Regalgasse verfahrbare Fördereinrichtung verstanden, die einen vertikalen Mast aufweist, an dem ein mit Lastaufnahmemitteln ausgestatteter Hubwagen vertikal auf und ab bewegt werden kann. Üblicherweise wird in jeder Regalgasse ein RBG eingesetzt, das die Fördergüter ein- und auslagert. RBGs sind dabei so ausgelegt, dass sie alle Ebenen einer Regalgasse bedienen können. Im Gegensatz dazu kommen bei den genannten Shuttle-Technologien einzelne Transporteinheiten mit Lastaufnahmemitteln, sog. Shuttles, zum Einsatz, wobei man zwischen OLS-Systemen (One-Level-Shuttles) und MLS-Systemen (Multi-Level-Shuttles) unterscheidet. Während ein OLS jeweils eine einzige Regalebene bedient (bzw. mittels Senkrechtförderern zwischen den Ebenen umgesetzt wird), verfügen MLS-Shuttles über eine Hubvorrichtung, die es ermöglicht, dass ein MLS mehrere Regalebenen bedient. Üblicherweise werden in einer Regalgasse mehrere MLS übereinander eingesetzt. Im Rahmen einer besonders flexiblen Ausgestaltung kommen OLS zum Einsatz, die derart ausgelegt sind, dass sie nicht nur in der Regalgasse, sondern zusätzlich auf außerhalb der Regalgassen auf den einzelnen Regalebenen angeordneten Plattformen operieren können. Über diese Plattformen, die bevorzugt an einem der (oder beiden) Regalenden positioniert sind, können die Shuttle dann in flexibler Weise Gassenwechsel vollziehen.

Im Hinblick auf das erfindungsgemäße Verfahren zum Betreiben eines Lager- und Entnahmesystems kann im Rahmen eines konkreten Ausführungsbeispiels eine vorteilhafte Auslagerung von Behältern aus dem Regallager realisiert werden. Hierzu kann in einem ersten Schritt vorgesehen sein, dass ein bestimmter Behälter als ein aus dem Lagerregal auszulagernder Ziel-Behälter definiert wird. Dieser Ziel-behälter kann sodann durch ein jeweiliges Regalförderzeug, in dessen Zugriff der Ziel-Behälter gelagert ist, von seinem Lagerplatz aufgenommen und zu einem Übergabeplatz transportiert werden. Von dem Übergabeplatz kann der Ziel-Behälter in einem nächsten Schritt von einem der auf der Gitterstruktur operierenden Transportfahrzeuge aufgenommen werden, vorzugsweise mittels der Lift- und Greifeinrichtung des Transportfahrzeugs, durch die Gitterstruktur hindurch auf ein Niveau oberhalb der Gitterstruktur angehoben werden und sodann zu einer vorgegebenen oder vorgebbaren Zielposition transportiert werden. Bei der Zielposition kann es sich bspw. um einen als Ziel-Arbeitsplatz definierten Arbeitsplatz handeln.

Umgekehrt kann im Rahmen eines konkreten Ausführungsbeispiels des erfindungsgemäßen Verfahrens auch eine vorteilhafte Einlagerung von Behältern in das Regallager realisiert werden. Hierzu kann in einem ersten Schritt vorgesehen sein, dass ein bestimmter Behälter als ein in das Lagerregal einzulagernder Ziel-Behälter definiert wird. Dieser Ziel-Behälter kann sodann durch ein Transportfahrzeug an seiner Quellposition aufgenommen werden, zu einer Position auf der Gitterstruktur oberhalb eines Übergabeplatzes transportiert werden und von dort durch die Gitterstruktur hindurch auf den Übergabeplatz abgesenkt werden. Von dem Übergabeplatz kann der Ziel-Behälter in einem nächsten Schritt von einem jeweiligen Regalförderzeug aufgenommen und zu einem als Ziel-Lagerplatz definierten Lagerplatz des Regallagers transportiert werden.

Es gibt nun verschiedene Möglichkeiten, die Lehre der vorliegenden Erfindung in vorteilhafter Weise auszugestalten und weiterzubilden. Dazu ist einerseits auf die nachgeordneten Ansprüche und andererseits auf die nachfolgende Erläuterung bevorzugter Ausführungsbeispiele der Erfindung anhand der Zeichnung zu verweisen. In Verbindung mit der Erläuterung der bevorzugten Ausführungsbeispiele der Erfindung anhand der Zeichnung werden auch im Allgemeinen bevorzugte Ausgestaltungen und Weiterbildungen der Lehre erläutert. In der Zeichnung zeigen
- Fig. 1: in einer perspektivischen Darstellung ein Ausführungsbeispiel eines erfindungsgemäßen Lager- und Entnahmesystems,
- Fig. 2: in einer perspektivischen Darstellung einen vergrößerten Ausschnitt des Lager- und Entnahmesystems nach Fig. 1,
- Fig. 3: in einer schematischen Draufsicht eine unterbrochene Gitterstruktur eines Lager- und Entnahmesystems gemäß einem Ausführungsbeispiel der Erfindung,
- Fig. 4: in einer perspektivischen Darstellung eine mit unregelmäßigem Raster ausgebildete Gitterstruktur eines Lager- und Entnahmesystems gemäß einem Ausführungsbeispiel der Erfindung,
- Fig. 5: in einer schematischen Draufsicht die Anordnung von Übergabeplätzen in einem Lager- und Entnahmesystem gemäß einem Ausführungsbeispiel der Erfindung,
- Fig. 6: in einer schematischen Draufsicht die Anordnung von Übergabeplätzen in einem Lager- und Entnahmesystem gemäß einem alternativen Ausführungsbeispiel der Erfindung,
- Fig. 7: in einer schematischen Seitenansicht die Anordnung von Übergabeplätzen in einem Lager- und Entnahmesystem auf unterschiedlichen Regalebenen gemäß einem Ausführungsbeispiel der Erfindung,
- Fig. 8: in einer ersten perspektivischen Darstellung ein Lager- und Entnahmesystem mit integrierter Fördertechnik und Lift gemäß einem Ausführungsbeispiel der Erfindung,
- Fig. 9: in einer zweiten perspektivischen Darstellung das Lager- und Entnahmesystem nach Fig. 8,
- Fig. 10: in einer ersten perspektivischen Darstellung ein Lager- und Entnahmesystem mit einer integrierten Fördertechnik gemäß einem Ausführungsbeispiel der Erfindung,
- Fig. 11: in einer zweiten perspektivischen Darstellung das Lager- und Entnahmesystem nach Fig. 10, und
- Fig. 12: in einer perspektivischen Darstellung ein Lager- und Entnahmesystem mit über das Regallager hinaus erweiterter Gitterstruktur gemäß einem Ausführungsbeispiel der Erfindung, und
- Fig. 13: in einer perspektivischen Darstellung ein Lager- und Entnahmesystem mit angeschlossenem Blocklager gemäß einem Ausführungsbeispiel der Erfindung.

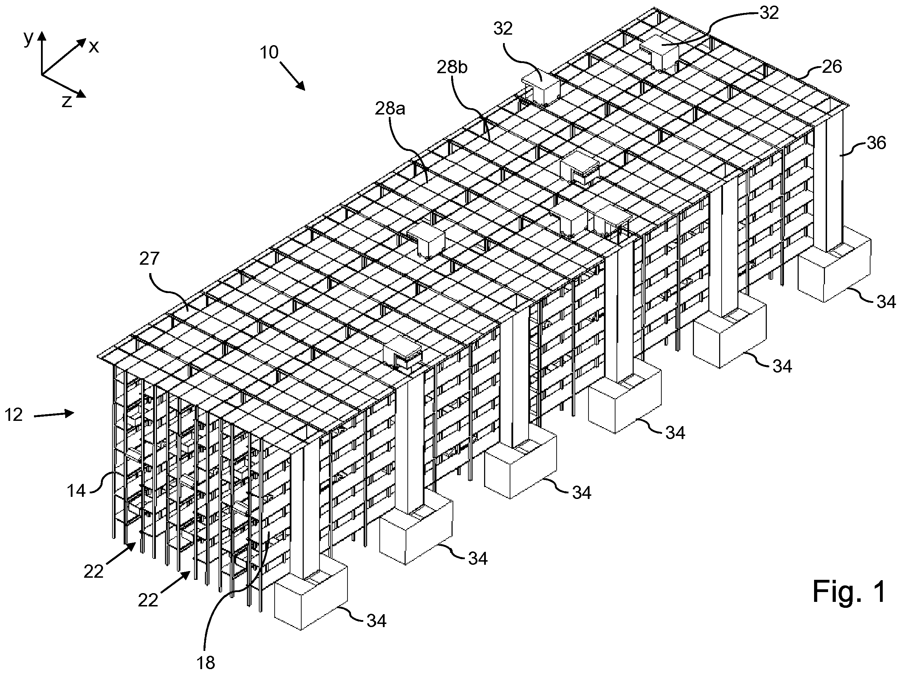

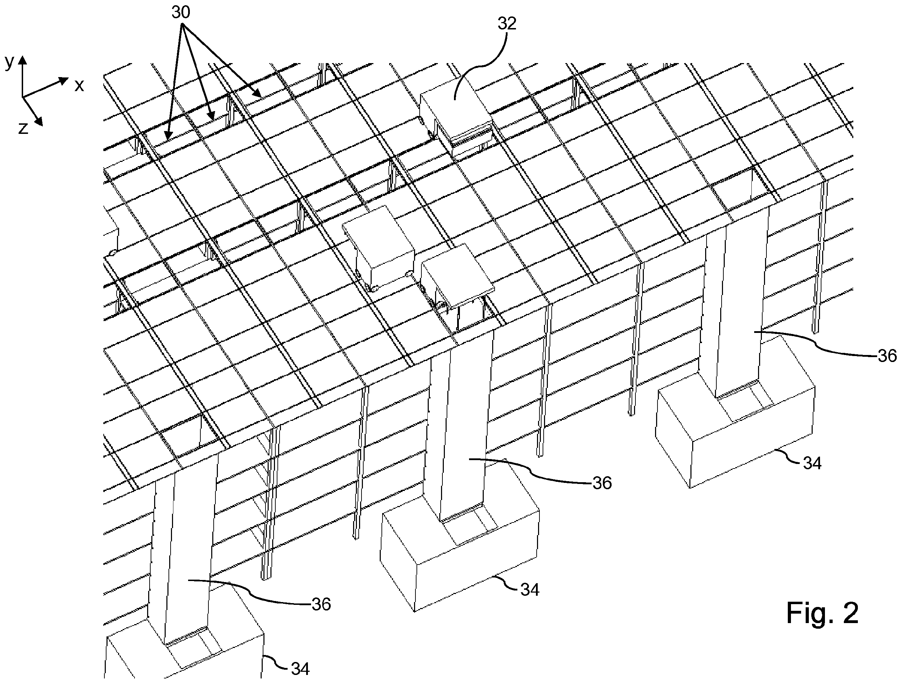

Die Fig. 1 und 2 zeigen in einer perspektivischen Darstellung ein Ausführungsbeispiel eines erfindungsgemäßen Lager- und Entnahmesystems 10 für Behälter 20, wobei Fig. 2 einen vergrößerten Ausschnitt des Lager- und Entnahmesystems 10 zeigt. Das Lager- und Entnahmesystem 10 umfasst ein Regallager 12 mit einer Anzahl von sich in einer Längsrichtung (x) erstreckenden Lagerregalen 14, die in einer oder mehreren übereinanderliegenden Regalebenen 16 Lagerplätze 18 für Behälter 20 aufweisen. Die in Fig. 1 dargestellte Anzahl an Lagerregalen 14 sowie deren Länge und Höhe ist rein beispielhaft gewählt und es versteht sich, dass das Lager- und Entnahmesystem 10 eine größere oder kleinere Anzahl an Lagerregalen 14 aufweisen kann und dass diese über eine größere oder kleinere Anzahl von Regalebenen verfügen können. Grundsätzlich kann der zur Verfügung stehende Lagerraum durch das erfindungsgemäße Lager- und Entnahmesystem 10 optimal ausgenutzt werden, wie weiter unten im Detail beschrieben wird.

Die Lagerregale 14 sind in einer Querrichtung (z) beabstandet zueinander angeordnet, derart, dass sich zwischen den jeweiligen Lagerregalen 14 eine Regalgasse 22 ergibt. Innerhalb jeder der Regalgasse 22 operiert mindestens ein automatisiertes in der jeweiligen Regalgasse 22 verfahrbares und zum Transport von Behältern 20 eingerichtetes Regalförderzeug 24 mit Zugriff auf die Lagerplätze 18. Das Regalförderzeug 24 kann bspw. als klassisches Regalbediengerät, RBG, oder als Shuttle-System (Einebenen-Shuttle, OLS, oder Mehrebenen-Shuttle, MLS) realisiert sein, wobei das konkrete System entsprechend den jeweiligen Anforderungen, insbesondere im Hinblick auf den zu erzielenden Durchsatz, angepasst sein kann. So könnten bspw. auch sog. OLS X zum Einsatz kommen, die innerhalb der Regalgasse grundsätzlich wie ein OLS operieren, die jedoch zusätzlich in der Lage sind, auf typischerweise an den Regalenden positionierten Plattformen (in Fig. 1 und 2 nicht dargestellt) im Sinne eines FTS einen Gassenwechsel zu vollziehen. Hierdurch lie-ße sich die zur Realisierung eines bestimmten Durchsatzes erforderliche Anzahl (klassischer) OLS-Shuttle reduzieren.

In erfindungsgemäßer Weise ist oberhalb des Regallagers 12 eine horizontale Gitterstruktur 26 angeordnet, wobei die Gitterstruktur 26 Längstransportwege 28a in der Längsrichtung (x) der Lagerregale 12 und Quertransportwege 28b in der Querrichtung (z) der Lagerregale 12 definiert. Auf der Gitterstruktur 26 operiert eine Anzahl von Transportfahrzeugen 32 für Behälter 20, die zur Fortbewegung entlang der Längstransportwege 28a und/oder der Quertransportwege 28b ausgebildet sind.

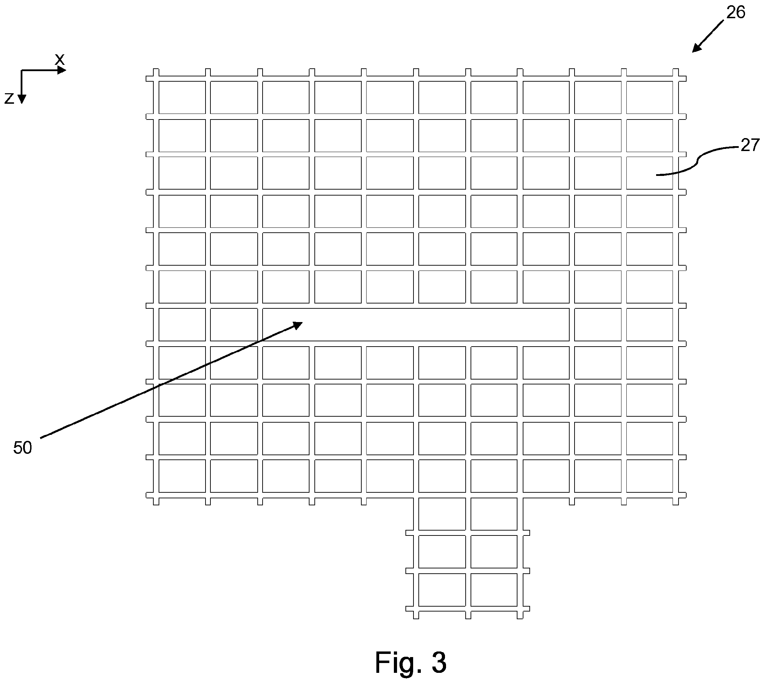

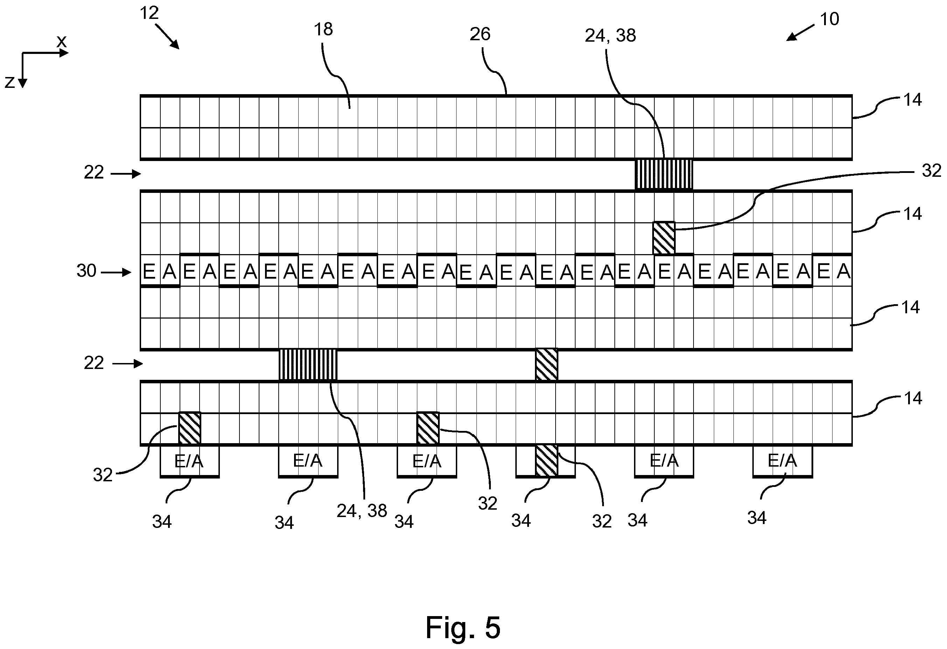

In weiter erfindungsgemäßer Weise sind in dem Regallager 12 Übergabeplätze 30 für Behälter 20 ausgebildet, wie weiter unten in Zusammenhang mit Fig. 5-7 im Detail erläutert wird. Jeder der Übergabeplätze 30 befindet sich im Zugriffsbereich mindestens eines der in den Regalgassen 12 operierenden Regalförderzeuge 24. Zudem ist jeder der Übergabeplätze 30 derart ausgebildet, dass er von oben frei zugänglich ist. Hierzu kann vorgesehen sein, dass die Gitterstruktur 26 derart auf die Dimensionierung des Regallagers 12 abgestimmt ist, dass jeder Übergabeplatz 30 mit einer Gitterzelle 27 der Gitterstruktur 26 korrespondiert. Zudem kann vorgesehen sein, dass die Gitterstruktur 26 unterbrochen ist und, zumindest bereichsweise, keine Quertransportwege 28b aufweist. In einem Bereich ohne Quertransportwege 28b entsteht somit eine Art Schlucht 50, unter der die Übergabeplätze 30 angeordnet sein können. Wenngleich diese Variante ggf. eine besondere Absturzsicherung erfordert, um ein Abstürzen der Transportfahrzeuge 32 zu verhindern, bietet die Variante den Vorteil, dass das Raster der Gitterstruktur 26 und das Regalraster der Übergabeplätze 30 nicht 100% zueinander passen muss, da die Transportfahrzeuge 32 entlang der Schlucht 50 an jeder Stelle stehen bleiben können, ohne auf das Gittermuster der Gitterstruktur 26 Rücksicht nehmen zu müssen. Eine entsprechende Ausführung einer solchen Gitterstruktur 26 ist beispielhaft in Fig. 3 dargestellt.

Zwischen den Übergabeplätzen 30 und der Unterseite der Gitterstruktur 26 können, durchgehend oder bereichsweise, vertikale Schächte bzw. Führungen zur sicheren und störungsfreien Führung der Behälter 20 während der von den Transportfahrzeugen bewirkten Vertikalbewegung vorgesehen sein Die Übergabeplätze 30 können passiv ausgeführt sein, bspw. in Form eines einfachen Blechs.

Die Transportfahrzeuge 32 haben Zugriff von oben auf die Übergabeplätze 30 des Regallagers 12 durch die Gitterstruktur 26 hindurch. Hierzu können die Transportfahrzeuge 32 bspw. über eine Lift- und Greifeinrichtung verfügen, die es den Transportfahrzeugen 32 ermöglicht, einen Behälter 20 zu greifen und entsprechend anzuheben bzw. abzusenken.

Wie in den Fig. 1 und 2 zu erkennen, umfasst das Lager- und Entnahmesystems 10 gemäß dem dargestellten Ausführungsbeispiel eine Anzahl von Arbeitsplätzen 34, die bspw. als Kommissionier-Arbeitsplätze ausgestaltet sind. In der konkreten Ausgestaltung sind die Arbeitsplätzen 34 in Reihe entlang einer der Längsseiten des Regallagers 12 angeordnet. Die Arbeitsplätze 34 stehen jeweils über einen Kopplungsschacht 36 mit einer Gitterzelle 27 der Gitterstruktur 26 in Verbindung. Selbstverständlich können die Arbeitsplätze 34 auch an anderen Seiten des Regallagers 12 als in den Fig. 1 und 2 gezeigt angeordnet sein, insbesondere auch an mehreren oder sogar an allen Seiten.

Dementsprechend ist ein Betrieb ermöglicht, wonach ein Regalförderzeug 24 einen Behälter 20, dessen Inhalt bspw. im Rahmen eines Kommissionierauftrags angefragt wird (Ziel-Behälter), von seinem Lagerplatz 18 aufnimmt und diesen horizontal zu einem der Übergabeplätze 30 transportiert und dort abstellt. Es sei an dieser Stelle nochmals angemerkt, dass das erfindungsgemäße Lager- und Entnahmesystem 10 für diesen Transport keine (zusätzliche) Fördertechnik benötigt.

Von dem Übergabeplatz 30 kann der Behälter 20 durch eines der Transportfahrzeuge 32 übernommen werden, durch die Gitterstruktur 26 hindurch auf ein Niveau oberhalb derselben angehoben und auf der Gitterstruktur 26 zu der mit dem jeweiligen Arbeitsplatz 34 korrespondierenden Gitterzelle 27 transportiert werden. Über den zugehörigen Kopplungsschacht 36 kann der Behälter 20 zu dem Arbeitsplatz 34 abgesenkt werden. Mithin fungieren die Übergabeplätze 30 als Schnittstellen zwischen dem Regallager 12 und den Regalförderzeugen 24 einerseits und dem System gebildet aus Gitterstruktur 26 und Transportfahrzeugen 32 (bzw. etwaigen damit gekoppelten Komponenten wie Arbeitsplätze, Blocklagern, etc.) andererseits.

Auf dem umgekehrten Weg kann ein Behälter 20, bspw. nach Abarbeitung eines Kommissionierauftrags, wieder in das Regallager 12 eingelagert werden, wobei wiederum die Übergabeplätze 30 als Schnittstellen fungieren.

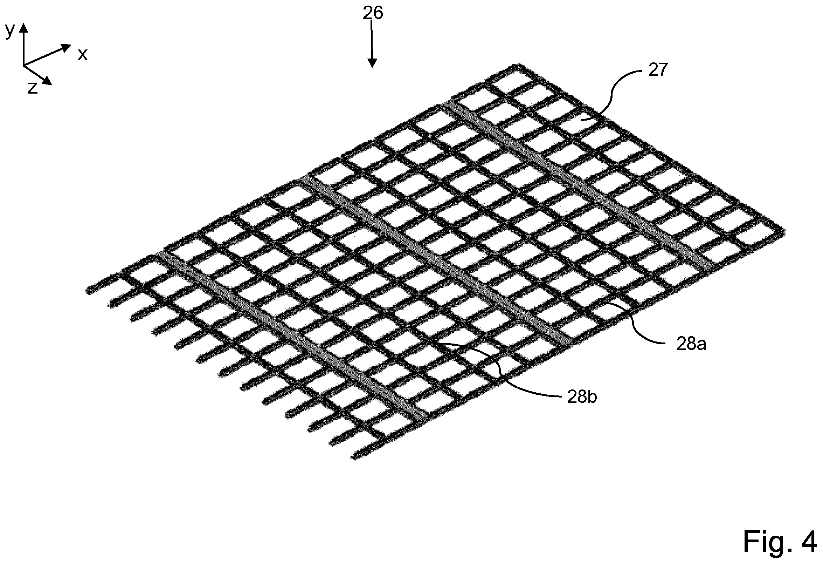

Wie bereits ausgeführt, wird die über dem Regallager 12 angeordnete Gitterstruktur 26 von denen Transportfahrzeugen 32 genutzt, um sich oberhalb des Regallagers 12 zu bewegen, bspw. um unterschiedliche Regalgassen 22 des Regallagers 12 oder die Arbeitsplätze 34 anzufahren. Hierzu kann die Gitterstruktur 26 schienenartig ausgeführt sein, wobei die Schienen an die Fahrwerke bzw. Räder der Transportfahrzeuge 32 angepasst sein können. Es sei in diesem Zusammenhang angemerkt, dass die Gitterstruktur 26 dabei nicht symmetrisch sein muss, sondern vielmehr unterschiedliche Raster aufweisen kann, um sich dem darunterliegenden Regallager 12 anzupassen, wobei die Struktur des Regallagers 12 bspw. auf eine quer ausgerichtete Lagerung von 600x400mm Behältern ausgelegt sein könnte. In der Konsequenz bedeutet dies, dass die Transportfahrzeuge 32 nicht zwingend überall abbiegen können, d.h. dass Ihnen nicht sämtliche vorhandenen Längs- und Quertransportwege 28a,b der Gitterstruktur 26 zwingend zur Verfügung stehen. Eine entsprechende Ausführung einer solchen Gitterstruktur 26 ist beispielhaft in Fig. 4 dargestellt.

Defekte oder gestörte Transportfahrzeuge 32 können bei dem erfindungsgemäßen Lager- und Entnahmesystem 10 in vorteilhafter Weise von der obersten Wartungsebene des Regallagers 12 entstört und/oder bewegt werden. Hierzu können entsprechende Luken und Absenkvorrichtungen vorgesehen sein, mit deren Hilfe defekte bzw. havarierte Transportfahrzeuge 32 von der Gitterstruktur 26 genommen werden. Anders als bei Blocklagern mit Bedienung von oben mittels auf einem Schienensystem operierenden Transportrobotern muss kein Techniker zur Bergung von Transportfahrzeugen 32 auf die Gitterstruktur 26 steigen. Somit ist bei dem erfindungsgemäßen Lager- und Entnahmesystem 10 kein Sicherheitsraum über der Gitterstruktur notwendig, welcher bei Blocklagern der in Rede stehenden Art aus Sicherheitsgründen zwingend eine Höhe von ca. 2 m aufweisen muss. Folglich bietet das erfindungsgemäße Lager- und Entnahmesystem 10 in dieser Hinsicht, zusätzlich zu der guten Zugänglichkeit der Transportfahrzeuge 32, eine optimale Raumausnutzung.

Fig. 5, in der gleiche Bezugszeichen gleiche oder ähnliche Komponenten bezeichnen wie in den Fig. 1 und 2, zeigt ein Ausführungsbeispiel eines erfindungsgemä-ßen Lager- und Entnahmesystems in einer schematischen Draufsicht. Das Regallager 12 des dargestellten Lager- und Entnahmesystems 10 umfasst beispielhaft zwei Regalgassen 22, in denen jeweils ein OLS Shuttle 38 operiert. Die OLS Shuttle 38 lagern doppelttief quer. Die Übergabeplätze 30 sind in einer Reihe angeordnet und befinden sich zwischen den Regalgassen 22, so dass sie von den OLS Shuttles 38 beider angrenzender Regalgassen 22 erreicht werden können. Aus Sicht der OLS Shuttle 38 befinden sich die Übergabeplätze 30 in der dargestellten Konfiguration auf der dreifachtiefen Position. Es versteht sich, dass andere Lagertiefen gleichfalls realisierbar sind. Je nach Anordnung der Übergabeplätze 30 können bestimmte Bereiche auch unterschiedlich tief ausgebildet sein.

In Fig. 5 sind die Übergabeplätze 30 entlang der Reihe alternierend mit ,E' für Einlagerung und mit ,A' für Auslagerung gekennzeichnet. Dementsprechend sind die mit 'E' gekennzeichneten Übergabeplätze 30 Plätze, auf denen die Transportfahrzeuge 32 Behälter 20 abstellen, welche dann von dort zum Zwecke der Einlagerung in das Regallager 12 von dem jeweiligen OLS Shuttle 38 übernommen werden. Umgekehrt handelt es sich bei den mit ,A' gekennzeichneten Übergabeplätzen 30 um solche Plätze, auf denen die OLS Shuttle 38 aus dem Regallager 12 auszulagernde Behälter 20 abstellen, von wo sie dann von einem Transportfahrzeug 32 übernommen werden können. Dadurch, dass den Übergabeplätzen 30 eine eindeutige Funktion (d.h. ,E' oder ,A') zugeordnet ist, ergibt sich ein strukturierter und damit effizienter Betrieb des Lager- und Entnahmesystems 10.

Insbesondere bei geringem Durchsatz könnte auch ,E'/,A' auf einem einzigen Übergabeplatz 30 vorgesehen sein, d.h. ein und derselbe Übergabeplatz 30 wird sowohl für die Einlagerung als auch für die Auslagerung genutzt. Im Rahmen einer vorteilhaften Ausgestaltung kann sogar vorgesehen sein, dass die 'E'/'A'-Deklarierung, d.h. die Zuweisung von ,E'/,A' Funktionen an die Übergabeplätze 30, dynamisch erfolgt und an den jeweiligen Bedarf angepasst wird. Dabei kann beispielsweise während Stoßzeit im Wareneingang mehr Übergabeplätzen eine Einlagerungsfunktion zugewiesen werden, wohingegen bei Hochzeiten im Versand mehr Auslagerungsplätze als Einlagerungsplätze vorgesehen sein können.

Bei dem in Fig. 5 dargestellten Ausführungsbeispiel ist vorgesehen, dass die Übergabeplätze 30 paarweise (d.h. jeweils als 'E'/'A'-Paar) angeordnet sind, wobei die Paare abwechselnd den beiden angrenzenden Regalgassen 22 zugeordnet sind. So ist beispielsweise das erste ,E'/;A'-Paar (ganz links in Fig. 5) der (in der Darstellung in Fig. 5) oberen Regalgasse 22 zugeordnet, das nächste ,E7'A'-Paar der unteren Regalgasse 22, das nächste Paar wieder der oberen Regalgasse, usw. In diesem Zusammenhang sei noch angemerkt, dass die an die Übergabeplätze 30 angrenzenden Lagerplätze 16 (abgesehen von einem für etwaige Umlagerungen einzuplanenden Freiraum) maximal belegt sein können, d.h. prinzipiell ist nur der Zugang zu den Übergabeplätzen 30 einer Regalebene 16 nicht als Lagerplatz genutzt.

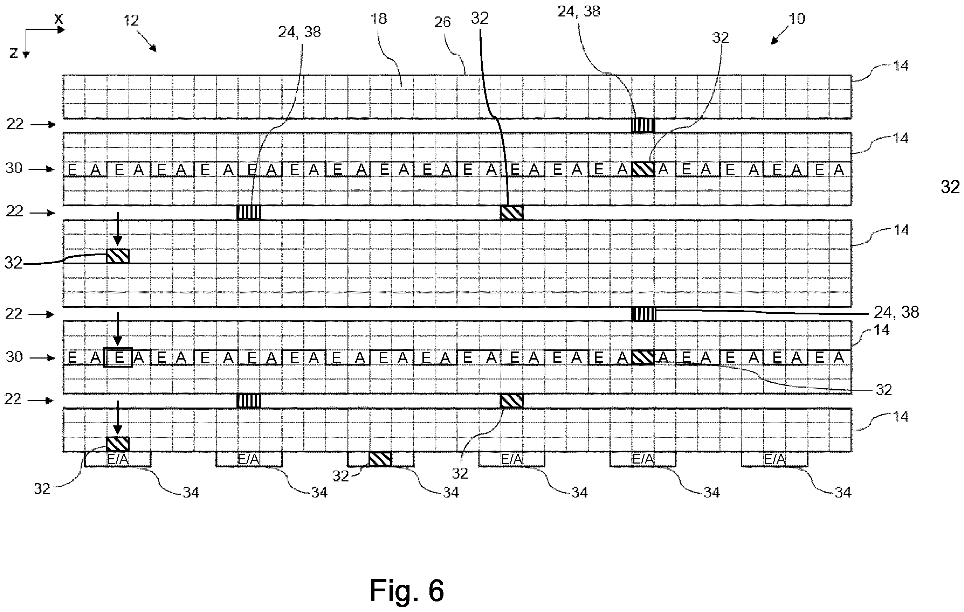

Fig. 6 zeigt ein Ausführungsbeispiel, bei dem die Regalförderzeuge 24 jeweils nur von einer Regalgasse 22 aus auf einen bestimmten Behälter 20 zugreifen können. Die Übergabeplätze 30 sind dabei nicht zwischen den Regalgassen 22, sondern auf den hintersten (d.h. gassenfernsten) Plätzen des mehrfachtief lagernden Regallagers 12 ausgebildet.

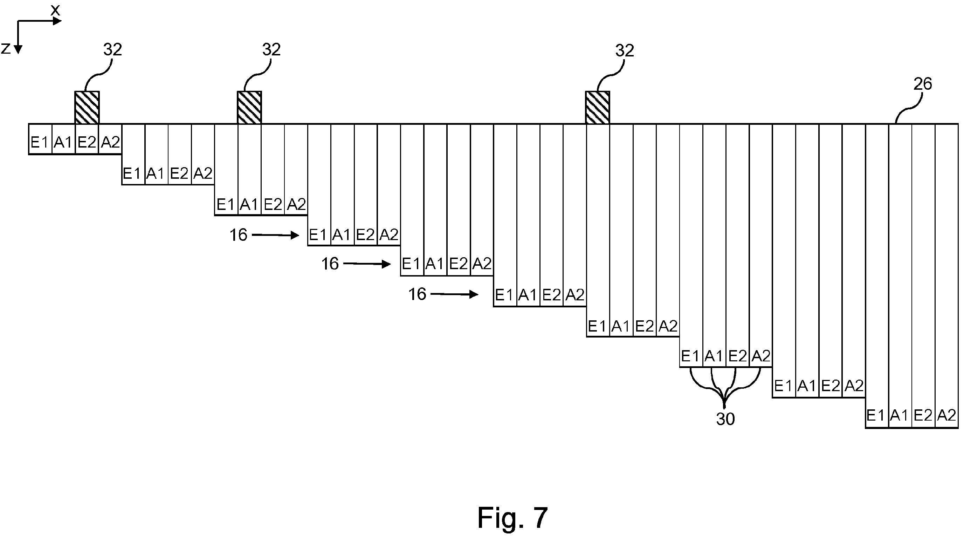

Fig. 7 zeigt eine Verteilung der Übergabeplätze 30 über die einzelnen Regalebenen 16 des Lagerregals 12 gemäß einem Ausführungsbeispiel der Erfindung. Danach ist eine treppenförmige Anordnung realisiert, wobei sich auf jeder Regalebene 16 jeweils ein E'/,A'-Paar von Übergabeplätzen befindet, nämlich das Paar 'E1'/'A1' für die eine der beiden angrenzenden Regalgassen 22 und das Paar E2'/,A2' für die andere der beiden angrenzenden Regalgassen 22. Der Regalplatz unterhalb der Treppe, d.h. unterhalb der jeweiligen Übergabeplätze, kann dabei ganz normal als Lagerplätze 18 für Behälter genutzt werden.

Die genaue Anzahl an Übergabeplätzen 30 sowie deren Verteilung über die einzelnen Regalebenen 16 sowie - im Fall von mehreren Regalgassen - über die einzelnen Regalgassen 22 kann in Abhängigkeit von den konkreten Leistungsanforderungen festgelegt werden, wobei für die Verteilung über die Regalebenen 16 eine Korrelation zwischen Höhe und Länge des Regallagers 12 und der maximalen Anzahl der Übergabeplätze 30 Berücksichtigung finden kann.

Grundsätzlich ist eine Anordnung von Vorteil, bei der für Ladegut bzw. Artikel umso höher liegende Übergabeplätze 30 genutzt werden, je größer deren Nachfrage ist. Hintergrund ist, dass die Hubbewegungen der Transportfahrzeuge 32 relativ langsam sind und höher liegende Übergabeplätze 30 geringere Hubbewegungen seitens der Transportfahrzeuge 32 erfordern. Bspw. könnten in dem in Fig. 7 gezeigten Ausführungsbeispiel die oberen Regalebenen 16 für stark nachgefragte Artikel (sog. A-Artikel) genutzt werden, während in den unteren Regalebenen 16 eher C-Artikel gelagert werden.

Andere Verteilungen der Übergabeplätze 30 über die Regalebenen 16 hinweg als die oben beschriebene Treppenform können ebenfalls realisiert werden und sich in bestimmten Situationen als vorteilhaft erweisen. So bietet sich die Treppenform bspw. zur Anbindung von Arbeitsplätzen 34 mit hoher Leistung an, z.B. Kommissionierarbeitsplätze, da diese dann in vorteilhafter Weise in dem Bereich der Übergabeplätze 30 mit geringer Hubhöhe platziert werden können. Langsamere Arbeitsplätze 34 (z.B. Arbeitsplätze mit QM Aufgaben oder vielen Nebentätigkeiten) können in vorteilhafter Weise in dem Bereich der Übergabeplätze 30 mit hoher Hubhöhe platziert werden. Sollen hingegen alle Arbeitsplätze 34 eine ähnliche Leistung erbringen, sollte die mittlere Hubhöhe für die Bereiche einzelner Arbeitsplätze ähnlich sein, so dass sich die Treppenform für diese Situation als ungeeignet erweist.

Es sei in diesem Zusammenhang angemerkt, dass jedes der eingesetzten Transportfahrzeuge 32 prinzipiell jeden Arbeitsplatz 34 anfahren kann. Dennoch sollten die Fahrwege der Transportfahrzeuge 32 im Hinblick auf optimale Leistung und Durchsatz optimiert werden, was im praktischen Betrieb zu Bereichen auf der Gitterstruktur 26 führt, die einem bestimmten Arbeitsplatz 34 bevorzugt zugeordnet sind.

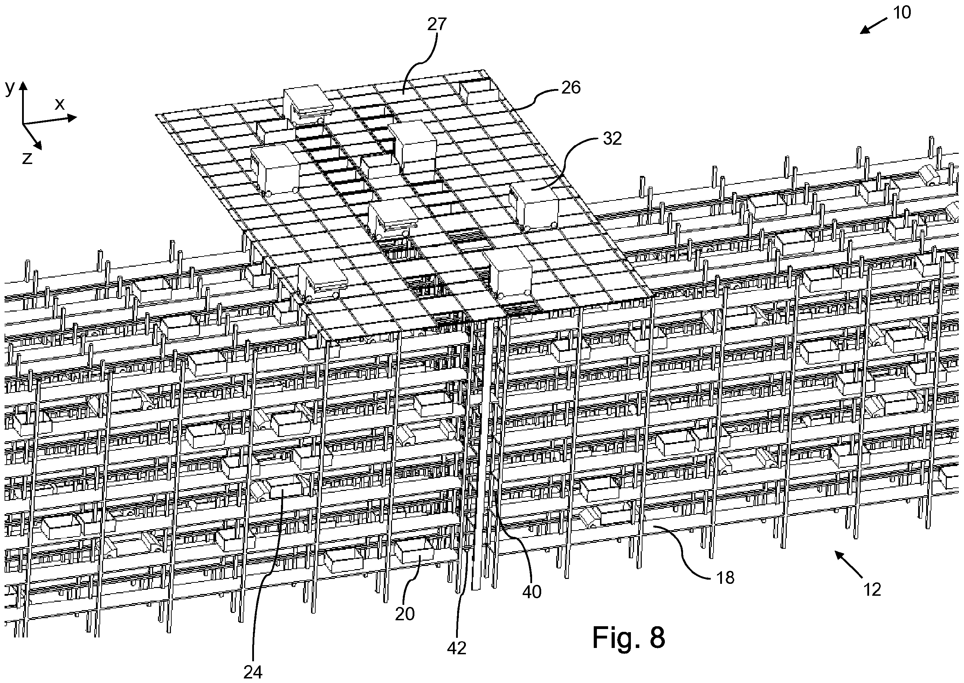

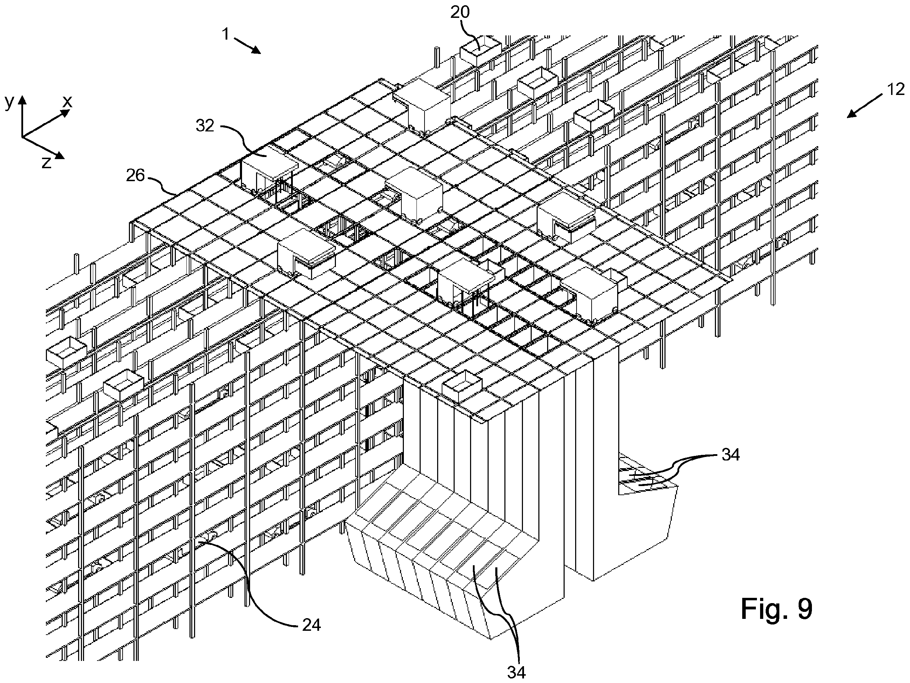

Fig. 8 und 9 zeigen in zwei unterschiedlichen perspektivischen Darstellungen ein weiteres Ausführungsbeispiel eines erfindungsgemäßen Lager- und Entnahmesystems. Danach ist eine Reihe von Arbeitsplätzen 34 beabstandet zu dem Regallager 12 angeordnet. Die Gitterstruktur 26 erstreckt sich über das eigentliche Regallager 12 hinaus, derart, dass die Gitterstruktur 26 das Regallager 12 und die Arbeitsplätze 34 miteinander verbindet. In dem dargestellten Ausführungsbeispiel überdeckt die Gitterstruktur 26 zudem nicht das gesamte Regallager 12, sondern ist nur oberhalb eines Teilbereichs des Regallagers 12 ausgebildet. Eine komplette Überdeckung wie in den zuvor beschriebenen Beispielen ist jedoch ebenfalls möglich.

Bei dem in den Fig. 8 und 9 dargestellten Ausführungsbeispiel ist in einem Bereich des Regallagers 12, welcher sich unterhalb der Gitterstruktur 26 befindet, eine Fördertechnik 40 vorgesehen, an welche die OLS Shuttle 38 Behälter 20 abgeben können. Von der Fördertechnik 40 werden die Behälter 20 zu einem Lift 42 transportiert, der die Behälter 20 auf die oberste Regalebene 16 des Regallagers 12 transportiert. Dort kann bspw. eine längere Förderstrecke verbaut sein, welche als Puffer dienen kann. Von dort können die Transportfahrzeuge 32 die Behälter 20, wie oben beschrieben, durch die Gitterstruktur 26 hindurch aufnehmen und zu einem der Arbeitsplätze 34 transportieren.

Wenngleich in den Fig. 8 und 9 nur an einer einzigen Stelle des Regallagers 12 ein Lift 42 gezeigt ist, können in einer weiteren Ausführungsform mehrere Lifte 42 über die Länge des Regallagers 12 vorgesehen sein. Jedem dieser Lifte 42 kann dabei eine Anzahl von Arbeitsplätzen 34 zugeordnet sein. Dabei kann vorgesehen sein, dass jedes OLS Shuttle 38 des Regallagers 12 Behälter 20 an jeden der Lifte 42 abgeben kann. Zudem kann vorgesehen sein, dass jedes Transportfahrzeug 32 Behälter 20 an jeden der Arbeitsplätze 34 abgeben kann, indem auf der Gitterstruktur 26 eine Verbindung mehrerer Arbeitsplätze 34 erlaubt ist.

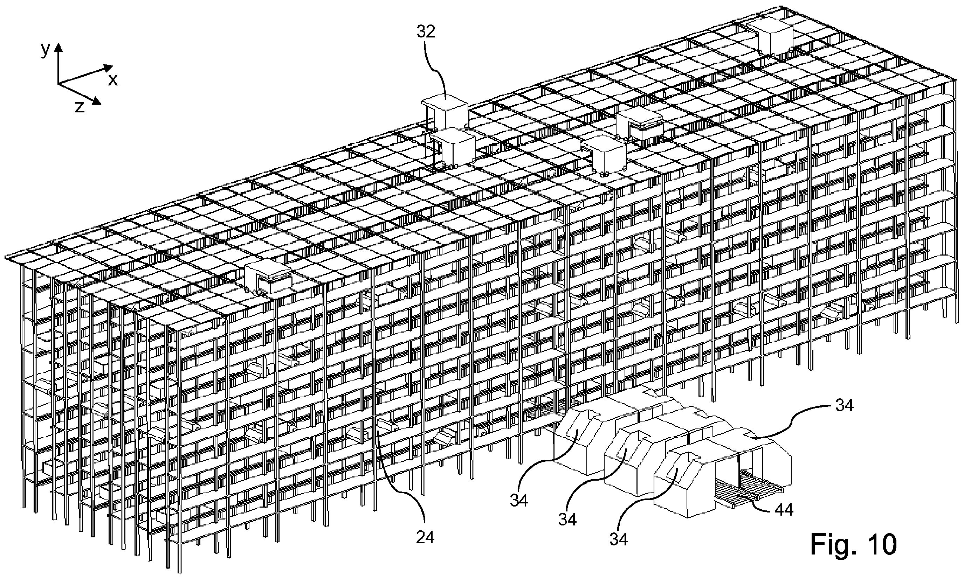

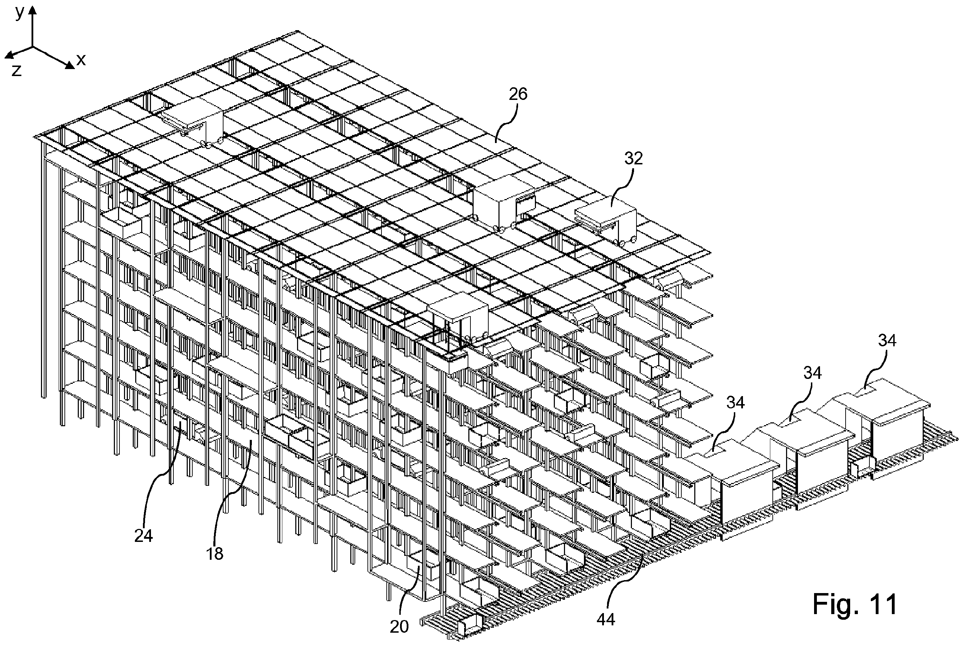

Fig. 10 und 11 zeigen in unterschiedlichen perspektivischen Darstellungen ein weiteres Ausführungsbeispiel eines erfindungsgemäßen Lager- und Entnahmesystems. Danach umfasst das System eine Fördertechnik 44, die quer (d.h. in z-Richtung verlaufend) im Regallager 12 angeordnet ist und eine Anzahl von Arbeitsplätzen 34 versorgt. Nachdem ein Transportfahrzeug 32, wie oben beschrieben, einen Behälter 20 von einem der Übergabeplätze 30 aufgenommen hat, kann es den Behälter 20 zu einer Gitterzelle 27 oberhalb der Fördertechnik 44 transportieren und an diese zum Weitertransport zu dem jeweiligen Arbeitsplatz 34 abgeben.

Ein möglicher Nachteil dieser Ausführung ist die Konzentration von Transportfahrzeugen 32 im Bereich der Fördertechnik 44, um an diese zu übergeben, was ggf. Leistungseinbußen mit sich bringen kann. Zur Abschwächung dieses Effektes können über die Länge des Regallagers 12 mehrere solcher Fördertechniken 44 angeordnet sein. Die Fördertechniken 44 sind dabei vorzugsweise als Loops ausgeführt. Ein solcher Loop kann auch auseinandergezogen sein, um die Konzentration von Transportfahrzeugen 32 weiter zu entschärfen. Seitlich der Loops könnten zudem separate Übergabeplätze vorgesehen sein, damit nicht "in den Förderfluss" übergeben werden muss, was per se teuer ist.

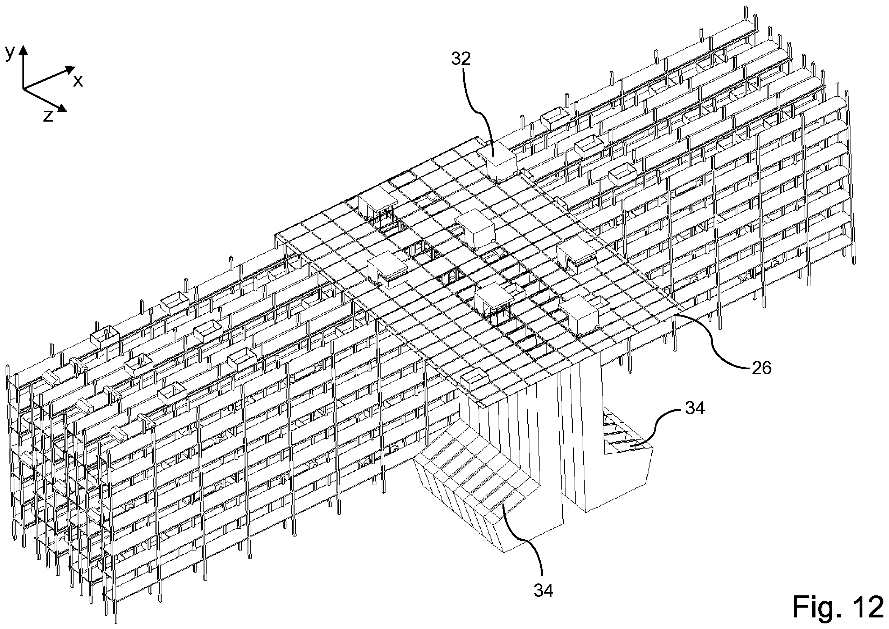

Fig. 12 zeigt in einer perspektivischen Darstellung ein weiteres Ausführungsbeispiel eines erfindungsgemäßen Lager- und Entnahmesystems. Danach ist die Gitterstruktur 26 über das Regallager 12 hinaus erweitert, wobei der überkragende Bereich der Gitterstruktur 26 genutzt wird, um verschiedene, auch entfernte Arbeitsplätze 34 anzubinden. Der überkragende Bereich der Gitterstruktur 26 könnte dabei am Boden der jeweiligen Lagerhalle aufgeständert sein. Sofern in diesem Bereich jedoch Flurfreiheit gewünscht oder gar erforderlich ist, könnte alternativ auch eine Abhängung von der Decke der Lagerhalle realisiert werden. Im Vergleich zu einer Positionierung der Arbeitsplätze 34 unmittelbar am Regallager 12, beispielsweise entlang einer Längsseite des Regallagers 12 wie in dem Ausführungsbeispiel nach Fig. 1 und 2 gezeigt, haben vom Regallager 12 entfernt positionierte Arbeitsplätze 34 zwar grundsätzlich den Nachteil der schlechteren Zugänglichkeit/Erreichbarkeit. Gleichzeitig bieten sie jedoch den Vorteil, dass die Konzentration von Transportfahrzeugen 32, welche in dem Ausführungsbeispiel gemäß Fig. 1 und 2 an der Regalseite mit den Arbeitsplätzen 34 signifikant erhöht ist, entschärft wird.

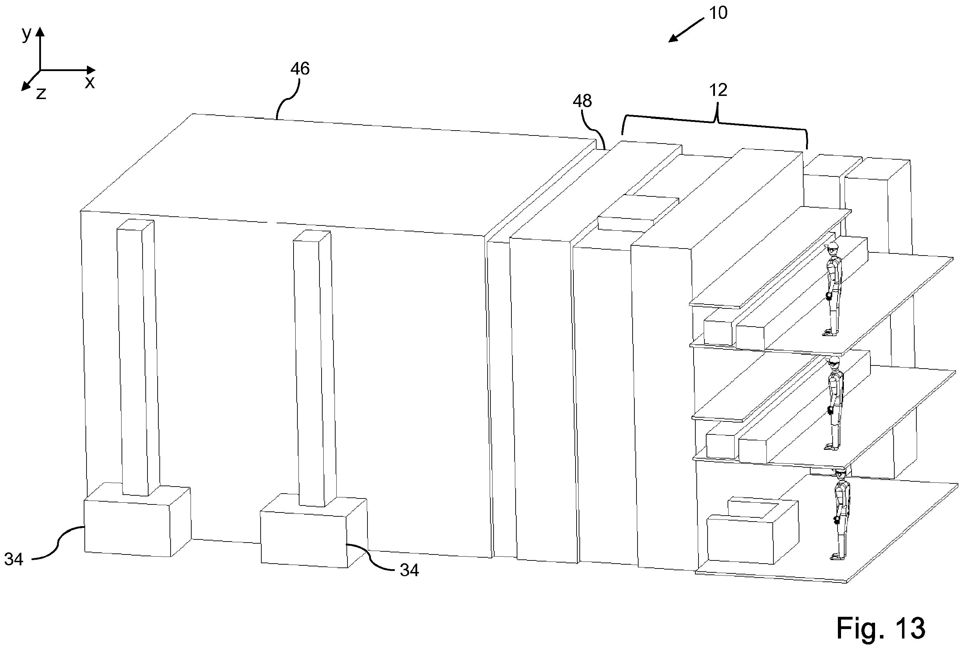

Fig. 13 zeigt in einer schematischen Perspektivdarstellung ein weiteres Ausführungsbeispiel eines erfindungsgemäßen Lager- und Entnahmesystems 10. Danach ist an das lediglich schematisch dargestellte Regallager 12 mit den darin ausgebildeten Übergabeplätzen 30 sowie der darüber insgesamt oder zumindest bereichsweise angeordneten Gitterstruktur 26 (beides in Fig. 13 nicht explizit dargestellt) ein ebenfalls nur schematisch dargestelltes Blocklager 46 (auf der linken Seite von Fig. 13 gezeigt) angeschlossen. Die Gitterstruktur 26 oberhalb des Regallagers 12 kann dabei als einheitliche Gitterstruktur zusammen mit der Gitterstruktur oberhalb des Blocklagers 46 ausgebildet sein. Das Blocklager 46 umfasst eine Anzahl von in Fig. 13 lediglich schematisch und beispielhaft dargestellten Arbeitsplätzen 34.

Ein Betrieb des Lager- und Entnahmesystems 10 gemäß Fig. 13 kann derart erfolgen, dass alle "normale" Elemente, d.h. Artikel mit durchschnittlicher Nachfrage, im Blocklager 46 gelagert werden, wohingegen sog. Schnelldreher, d.h. Artikel mit überdurchschnittlicher Nachfrage, sowie Behälter 20, die einen Direktzugriff erfordern (Versandlager/MFC (Micro Fulfillment Center) tauglich) vom Blocklager 46 in das mit Shuttles betriebene Regallager 12 umgelagert werden. Durch diese Maßnahme könnte die ABC-Verteilung in dem Blocklager 46 abgeflacht werden und Systeme wie die Schnelldreherkommissionierung mit Bahnhofsanlage wären umsetzbar. Fig. 13 zeigt auf der rechten Seite schematisch und beispielhaft die Ankopplung einer solchen Anlage mit Direktzugriff an das Regallager 12. Es sei angemerkt, dass entgegen der Darstellung in Fig. 13 das Regallager 12 auch niedriger als das Blocklager 46 und mit nur wenigen Ebenen ausgeführt sein kann.

Im Rahmen einer konkreten Ausführungsform kann vorgesehen sein, dass die Übergabeplätze 30 in einem an das Blocklager 46 angrenzenden Randbereich 48 des Regallagers 12 angeordnet sind. Dieser Randbereich 48 definiert somit eine Übergabezone, wobei diese bspw. als Schleuse zwischen unterschiedlichen Kühl- und/oder sonstigen Zustandsbereichen im Regallager 12 einerseits und in Blocklager 46 andererseits ausgeführt sein könnte.

Im Rahmen einer konkreten Ausführungsform kann zudem vorgesehen sein, dass das Regallager 12 als ein Kühllager ausgeführt ist und dass die Auslagerung von Behältern 20 über das Blocklager 46 abgewickelt wird. Auf diese Weise kann erreicht werden, dass im Blocklager 46 keine aufwändigen Kühlbereiche aufgebaut werden müssen. Eine ähnliche Entkopplung kann auch für die Lagerung von Behältern 20 mit explosiongefährlichen Stoffen (insbesondere niedrige Ex-Artikel) realisiert werden.

Vorteile, die zumindest mit einigen der beschriebenen Ausführungsbeispiele des erfindungsgemäßen Lager- und Entnahmesystems erzielt werden können, lassen sich abschließend wie folgt zusammenfassen:
- Ausgestaltung als reines "Roboterlager" möglich (ohne Fördertechnik und Senkrechtförderer)
- Schnelle Inbetriebnahme
- Optimale Ausnutzung der Gebäudehöhe
- "Queranordnung" Lager / Arbeitsplätze möglich
- gute Zugänglichkeit, Direktzugriff auf die Behälter (kein "Buddeln"), dadurch kürzere Durchlaufzeiten
- Sequenzierung möglich
- Einhaltung Arbeitsschutz ohne aufwändige Maßnahmen möglich
- herkömmlicher Brandschutz ausreichend, existierende Brandschutznormen anwendbar
- mehrere Behälterhöhen im Regallager möglich
- keine proprietären Behälter notwendig

Hinsichtlich weiterer vorteilhafter Ausgestaltungen des erfindungsgemäßen Lager- und Entnahmesystems sowie des erfindungsgemäßen Verfahrens zum Betreiben eines Lager- und Entnahmesystems wird zur Vermeidung von Wiederholungen auf den allgemeinen Teil der Beschreibung sowie auf die beigefügten Ansprüche verwiesen.

Schließlich sei ausdrücklich darauf hingewiesen, dass die voranstehend beschriebenen Ausführungsbeispiele der erfindungsgemäßen Vorrichtung lediglich zur Erörterung der beanspruchten Lehre dienen, diese jedoch nicht auf die Ausführungsbeispiele einschränken.

### Bezugszeichenliste

- 10: Lager- und Entnahmesystem
- 12: Regallager
- 14: Lagerregal
- 16: Regalebene
- 18: Lagerplatz
- 20: Behälter
- 22: Regalgasse
- 24: Regalförderzeug
- 26: Gitterstruktur
- 27: Gitterzelle
- 28a: Längstransportweg
- 28b: Quertransportweg
- 30: Übergabeplatz
- 32: Transportfahrzeug
- 34: Arbeitsplatz
- 36: Kopplungsschacht
- 38: OLS Shuttle
- 40: Fördertechnik
- 42: Lift
- 44: Fördertechnik
- 46: Blocklager
- 48: Randbereich
- 50: Schlucht

## Patentansprüche

1. Lager- und Entnahmesystem für Behälter, umfassend:
ein Regallager (12) mit einer Mehrzahl von sich in einer Längsrichtung (x) erstreckenden Lagerregalen (14), die in einer oder mehreren übereinanderliegenden Regalebenen (16) Lagerplätze (18) für Behälter (20) aufweisen, wobei einige der Lagerregale (14) in einer Querrichtung (z) beabstandet zueinander angeordnet sind, derart, dass sich zwischen den jeweiligen Lagerregalen (14) eine Regalgasse (22) ergibt; sowie
mindestens ein automatisiertes in der Regalgasse (22) verfahrbares und zum Transport von Behältern (20) eingerichtetes Regalförderzeug (24) mit Zugriff auf die Lagerplätze (18);
**gekennzeichnet durch**
eine oberhalb des Regallagers (12) angeordnete horizontale Gitterstruktur (26), wobei die Gitterstruktur (26) Längstransportwege (28a) in der Längsrichtung (x) der Lagerregale (12) und Quertransportwege (28b) in der Querrichtung (z) der Lagerregale (12) definiert;
eine Anzahl von in dem Regallager (12) ausgebildeten, von oben frei zugänglich ausgebildeten Übergabeplätzen (30) für Behälter (20) mit Zugriff durch das mindestens eine Regalförderzeug (24); sowie
mindestens ein zum Fahren auf der Gitterstruktur (26) entlang der Längstransportwege (28a) und/oder der Quertransportwege (28b) ausgebildetes Transportfahrzeug (32) für Behälter (20) mit Zugriff von oben auf die Übergabeplätze (30) des Regallagers (12) durch die Gitterstruktur (26) hindurch.

2. Lager- und Entnahmesystem nach Anspruch 1, **dadurch gekennzeichnet, dass** die Transportfahrzeuge (32) eine Lift- und Greifeinrichtung zum Anheben und/oder Absenken von Behältern (20) umfassen, wobei über den Übergabeplätzen (30) Schächte zur Führung der Lift- und Greifeinrichtung angeordnet sind.

3. Lager- und Entnahmesystem nach Anspruch 1 oder 2, **dadurch gekennzeichnet, dass** die Gitterstruktur (26) eine Anzahl von Gitterzellen (27) aufweist, die jeweils einem Arbeitsplatz (34) zugeordnet sind,
wobei das mindestens eine Transportfahrzeug (32) eingerichtet sein kann, einen als Ziel-Behälter definierten Behälter (20) von einem jeweiligen der Übergabeplätze (30) aufzunehmen, den Ziel-Behälter auf ein Niveau oberhalb der Gitterstruktur (26) anzuheben und zu der einem als Ziel-Arbeitsplatz definierten Arbeitsplatz (34) zugeordneten Gitterzelle (27) zu transportieren.

4. Lager- und Entnahmesystem nach einem der Ansprüche 1 bis 3, **dadurch gekennzeichnet, dass** mindestens eine vorzugsweise in Querrichtung (z) verlaufende, an einen oder mehrere Arbeitsplätze (34) ankoppelnde Fördertechnik (40) in das Regallager (12) integriert ist,
wobei das mindestens eine Transportfahrzeug (32) eingerichtet sein kann, einen als Ziel-Behälter definierten Behälter (20) von einem jeweiligen der Übergabeplätze (30) aufzunehmen, den Ziel-Behälter auf ein Niveau oberhalb der Gitterstruktur (26) anzuheben und an die jeweilige der an einen als Ziel-Arbeitsplatz definierten Arbeitsplatz (34) ankoppelnde Fördertechnik (40) abzugeben.

5. Lager- und Entnahmesystem nach einem der Ansprüche 1 bis 4, **dadurch gekennzeichnet, dass** die Übergabeplätze (30) in einer sich in der Längsrichtung (x) der Lagerregale (12) erstreckenden Reihe zwischen zwei benachbarten Regalgassen (22) ausgebildet sind.

6. Lager- und Entnahmesystem nach einem der Ansprüche 1 bis 5, **dadurch gekennzeichnet, dass** sich die Übergabeplätze (30) einer zwischen jeweils zwei benachbarten Regalgassen (22) angeordneten Reihe von Übergabeplätzen (30) im gemeinsamen Zugriff durch die in den jeweiligen zueinander benachbarten Regalgassen (22) operierenden Regalförderzeuge (24) befinden.

7. Lager- und Entnahmesystem nach einem der Ansprüche 1 bis 6, **dadurch gekennzeichnet, dass** die Übergabeplätze (30) auf den hintersten Plätzen eines Lagerregals (12) mit mehrfachtiefer Lagerung ausgebildet sind.

8. Lager- und Entnahmesystem nach einem der Ansprüche 1 bis 7, **dadurch gekennzeichnet, dass** die Übergabeplätze (30) einer Reihe von Übergabeplätzen (30) in unterschiedlichen Regalebenen (16) der Lagerregale (14) angeordnet sind.

9. Lager- und Entnahmesystem nach einem der Ansprüche 1 bis 8, **dadurch gekennzeichnet, dass** die Anordnung der Übergabeplätze (30) entlang einer Lagerregalreihe einen treppenförmigen Verlauf in Bezug auf die Regalebenen (16) aufweist.

10. Lager- und Entnahmesystem nach einem der Ansprüche 1 bis 9, **dadurch gekennzeichnet, dass** die Gitterstruktur (26) derart auf die Dimensionierung des Regallagers (12) abgestimmt ist, dass jede Gitterzelle (27) der Gitterstruktur (26) mit einem Lagerplatz (18) bzw. Übergabeplatz (30) korrespondiert, und/oder
**dadurch gekennzeichnet, dass** die Gitterstruktur (26) unterbrochen ist und zumindest bereichsweise keine Quertransportwege (28b) aufweist.

11. Lager- und Entnahmesystem nach einem der Ansprüche 1 bis 10, **dadurch gekennzeichnet, dass** die Gitterstruktur (26) zur Anbindung entfernter Arbeitsplätze (34) und/oder eines Blocklagers zumindest einseitig über das Regallager (12) hinausragt.

12. Lager- und Entnahmesystem nach einem der Ansprüche 1 bis 11, **dadurch gekennzeichnet, dass** das Regalförderzeug (24) als Regalbediengerät, RBG, als Einebenen-Shuttle, OLS, oder als Mehrebenen-Shuttle, MLS, ausgebildet ist.

13. Verfahren zum Betreiben eines Lager- und Entnahmesystems nach einem der Ansprüche 1 bis 12, umfassend:
Transportieren eines Behälters (20) zu einem Übergabeplatz (30) und Abstellen des Behälters (20) auf dem Übergabeplatz (30) durch das Regalförderzeug (24) und Übernahme des Behälters (20) von dem Übergabeplatz (30) durch die Gitterstruktur (26) hindurch und Weitertransport durch das mindestens eine Transportfahrzeug (32); und/oder
Transportieren eines Behälters (20) zu einem Übergabeplatz (30) und Abstellen des Behälters (20) auf dem Übergabeplatz (30) durch die Gitterstruktur (26) hindurch durch das mindestens eine Transportfahrzeug (32) und Übernahme des Behälters (20) von dem Übergabeplatz (30) und Weitertransport durch das Regalförderzeug (24).

14. Verfahren nach Anspruch 13, weiterhin umfassend:
Definieren eines Behälters (20) als einen aus dem Lagerregal (12) auszulagernden Ziel-Behälter;
Transportieren des Ziel-Behälters durch das Regalförderzeug (24) von dem Lagerplatz (18) des Ziel-Behälters zu einem Übergabeplatz (30); und
Aufnehmen des Ziel-Behälters von dem Übergabeplatz (30) durch das mindestens eine Transportfahrzeug (32), Anheben des Ziel-Behälters auf ein Niveau oberhalb der Gitterstruktur (26) und Transportieren des Ziel-Behälters zu einer Zielposition, vorzugsweise einem als Ziel-Arbeitsplatz definierten Arbeitsplatz (34).

15. Verfahren nach Anspruch 13 oder 14, weiterhin umfassend:
Definieren eines Behälters als einen in das Lagerregal einzulagernden Ziel-Behälter;
Transportieren des Ziel-Behälters durch das mindestens eine Transportfahrzeug (32) von einer Quellposition zu einer Position auf der Gitterstruktur (26) oberhalb eines Übergabeplatzes (30) und Absenken des Ziel-Behälters durch die Gitterstruktur (26) hindurch auf den Übergabeplatz (30); und
Aufnehmen des Ziel-Behälters von dem Übergabeplatz (30) durch das Regalförderzeug (24) und Transportieren des Ziel-Behälters zu einer Zielposition, vorzugsweise einem als Ziel-Lagerplatz definierten Lagerplatz (18) des Regallagers (12).
